# EUROPEAN PATENT SPECIFICATION

(11) **EP 2 406 519 B1**
(45) Date of publication and mention of the grant of the patent: **04.09.2013**
(21) Application number: 09786334.4
(22) Date of filing: 17.03.2009
(51) Int. Cl.: F16F 7/09, D06F 37/22, D06F 37/20

(54) **FRICTION SHOCK ABSORBER**
REIBUNGSSTOSSDÄMPFER
AMORTISSEUR DE CHOCS À FRICTION

(30) Priority: 13.03.2009 TR 200901985
(43) Date of publication of application: 18.01.2012
(73) Proprietor: Kaniöz, Adil, 41480 Gebze - Kozaeli (TR)
(72) Inventor: Kaniöz, Adil, 41480 Gebze - Kozaeli (TR)
(74) Representative: Sevinç, Erkan
(86) International application number: PCT/IB2009/051125
(87) International publication number: WO 2010/103349

(56) References cited:
- EP-A- 0 301 190
- EP-A- 0 686 720
- EP-A- 1 754 908
- WO-A-98/26194
- DE-A1- 3 216 152
- DE-A1- 19 940 191
- TR-A2- 200 400 107
- US-A- 4 768 629
- US-A- 4 955 467

## Description

### Field of the Invention

This invention relates to a friction shock absorber which is used in washing machines wherein the washing drum rotates on the horizontal axis (see for example, EP 1637640 A1, corresponding to the preamble of claim 1).

### Prior Art

Shock absorbers provided in washing machines are generally of two types. In the first type, the damping power is always constant while there occurs some decrease in the power only when it warms up, and causes extra vibration in the small drum movements where low damping is required. In the second type the damping power can be reset in the small drum movements. Thus, both the shock absorber becomes long-lasting and the vibration level of the machine can be reduced.

Among the known embodiments in the art, the European patent application EP 0686720 A1 discloses an absorber comprising a piston moveable between the two springs located at the end of the shaft. The springs used in this absorber are precompressed. A further shock absorber provided in washing machines or the like is known from WO 98/26194 A1.

The United States patent application US 4,768,629 discloses a shock absorber wherein a progressive ring is utilized for fastening the spring. As for the United States patent application US 4,955,467 a shock absorber wherein the springs are not fastened on the shaft is disclosed.

The German patent application DE3216152 A1 discloses a shock absorber which moves back and forth inside the body as a result of the inclination of the piston bowls which are fixed on the shaft. The piston herein comprises a plurality of components which are actuated with various mechanisms.

In the Turkish patent application TR 200400107A2, it is aimed to have a smooth force transition during direction change, by means of directly contacting the conic pieces with the side surface of the friction mat parallel to the axis for the first time. In this design, the plastic piston does not contact the coupling conics. Although this system is very successful, its production cost is high.

In the Unites States patent application US7,445,098, the above-mentioned Turkish patent application TR 200400107 A2 was taken as basis where a cheaper pipe type was utilized instead of the shaft. The shaft and the spring system are abandoned. However, contrary to said patent application TR 200400107 A2, as the plastic piston is in contact with the plastic body, it can not be successful.

The noise level could not be sufficiently reduced in the systems disclosed in the above mentioned patent applications. Besides, the production cost of the known absorbers is high.

### Summary of the Invention

The objective of the present invention is to produce the second action upon resetting the friction force in low oscillations by using the damper that provides the first action in the double action absorbers in exactly the same way; and while doing so, to realize a triple action friction shock absorber which provides a third damping action between the first and the second actions by extending the transition over a period of time.

The invention is defined by the technical features set forth in claim 1; additional features of the invention are disclosed in the dependent claims.

The shock absorber developed for the said objective comprises a carrier piston that contacts the friction element only from its outside, a friction element two sides of which are completely exposed, stopper protrusions disposed with an angle of 45° to each other in the work axis to contact the friction element, canal ribs located in the inner surface of the body for restricting rotation of the piston within the shock absorber body, a shock absorber body having a larger diameter than the piston for keeping the piston away from the inner surface of the body and providing acoustic improvement. The friction element only contacts the stopper protrusions. The friction ring carrying the friction element does not contact the body of the shock absorber.

When the drum of the washing machine is rotating at a high and constant speed, it produces some oscillation. It is sufficient for the shock absorber piston to freely move in the space formed within the machine. The drum vibration of the washing machine is only absorbed by the springs of the washing machine and the transmission of the vibration to the legs of the machine contacting the floor is prevented.

Flexible bearings with symmetrical geometry are formed within the body and on the lock ring that prevents displacement of the friction piston, for the movements which are perpendicular to the work axis of the shock absorber.

The fact that the shock absorber according to the present invention is comprised of few pieces enables the production costs of the shock absorber to be low.

### Detailed Description of the Invention

The "Triple action friction shock absorber" realized in order to attain the objectives of the invention is illustrated in the accompanying figures, wherein;
Figure 1 is the view of the application of the triple action friction shock absorber according to the invention on the washing machine having a drum rotating on the horizontal axis.
Figure 2 is the side view of the application of the triple action friction shock absorber according to the invention on the washing machine having a drum rotating on the horizontal axis.

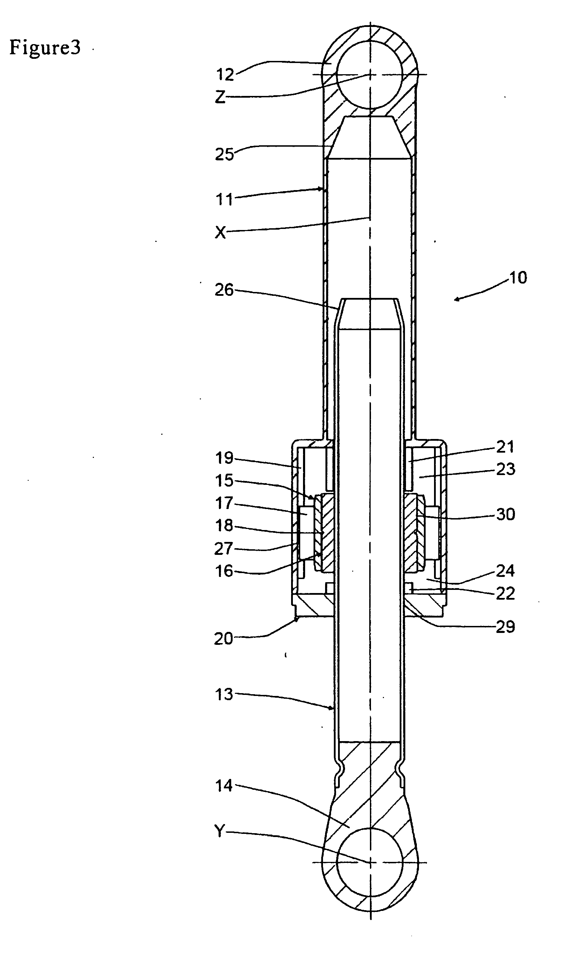

Figure 3 is the axial sectional view of the triple action friction shock absorber, according to the invention.

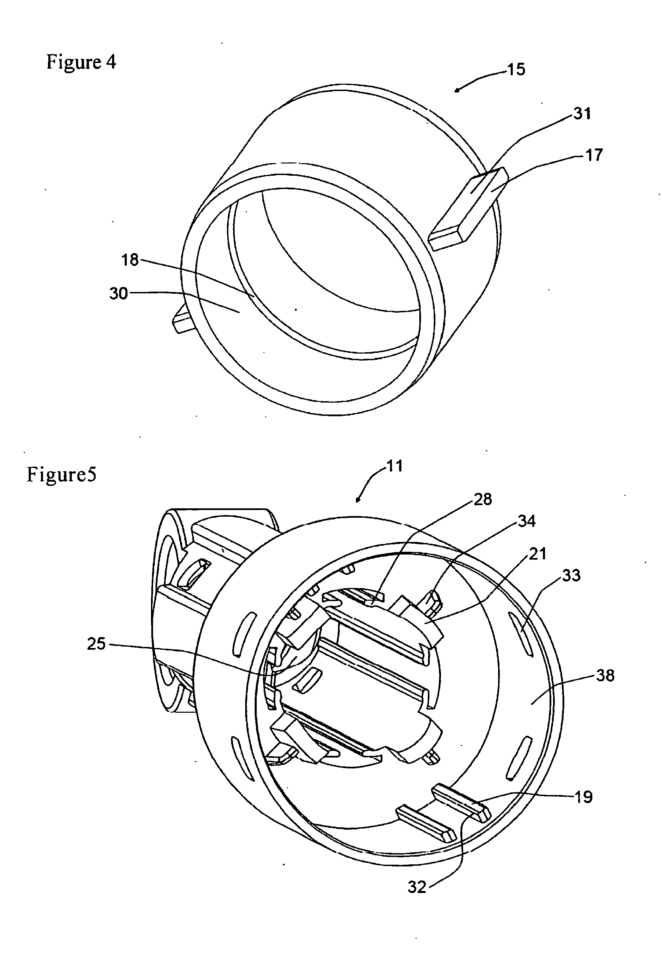

Figure 4 is the perspective view of the friction ring provided in the triple action friction shock absorber.
Figure 5 is the perspective view of the shock absorber body in the triple action friction shock absorber.

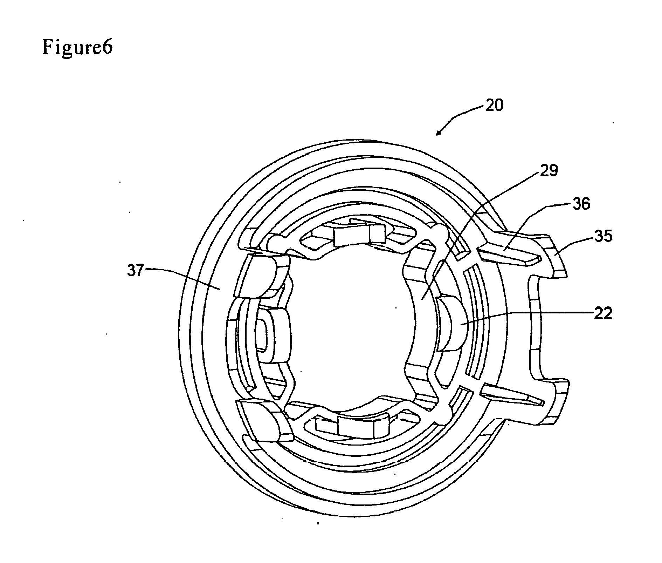

Figure 6 is the perspective view of the lock ring in the triple action friction shock absorber.

The components in the figures have each been numbered corresponding to the following:
1. Drum
2. Motor
3. Spring
4. Body
5. Drum spring suspension ring
6. Washing machine spring suspension ring
7. Washing machine base
8. Drum bracket
9. Base bracket
10. Triple action friction shock absorber
11. Shock absorber body
12. Shock absorber body connecting element
13. Shock absorber piston
14. Shock absorber piston connecting element
15. Friction ring
16. Friction element
17. Bearing rib
18. Protrusion
19. Friction ring canal rib
20. Lock ring
21. Body stopper protrusion
22. Lock ring stopper protrusion
23. Upper isolation space
24. Lower isolation space
25. Body stopper conic
26. Piston stopper conic
27. Bearing space
28. Body flexible bearings
29. Lock ring flexible bearings
30. Friction ring - friction element contact surface
31. Shock absorber body bearing rib side surface
32. Friction ring canal rib contact surface
33. Lock ring pin hole
34. Body stopper protrusion support rib
35. Lock pin
36. Lock pin support rib
37. Lock ring - shock absorber body contact surface
38. Shock absorber body - lock ring contact surface

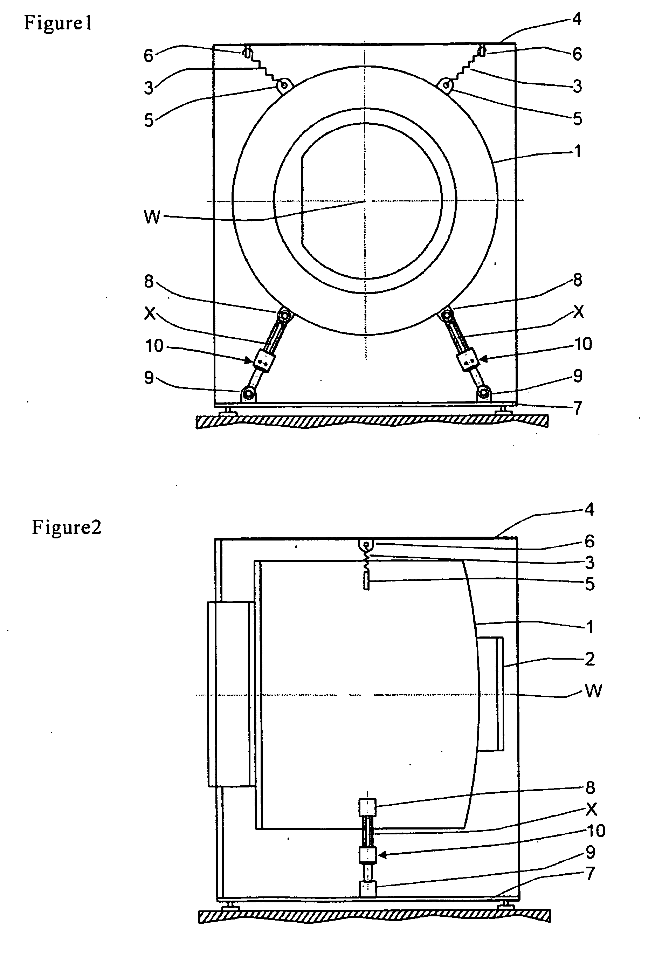

The triple action friction shock absorber (10) according to the invention is preferably used in front loading washing machines. The washing machine, on which the triple action friction shock absorber (10) is applied, comprises a motor (2) on the horizontal axis (W) and a drum (1) rotating by means of the motor (2). The drum (1) is connected to the washing machine body (4) by means of the springs (3) disposed between the drum spring suspension ring (5) and the washing machine spring suspension ring (6) located on the body (4). On the other hand, the drum (1) is coupled to the washing machine base (7) along the X axis by means of at least two shock absorbers (10) mounted between the drum bracket (8) and the base bracket (9) (Figure 1 and Figure 2).

The shock absorber piston (13) is coupled to the washing machine base (7) via the base bracket (9) by means of a hinge. The shock absorber piston (13) can move around the axis (Y) of the connecting element (14). The shock absorber body (11) is hingedly connected to the drum bracket (8) and can move around the axis (Z) of the connecting element (12). The shock absorber body (11) is connected to the drum (1) and moves along the axis (X) of the shock absorber. The shock absorber piston (13) can be made of metal or plastic, while the shock absorber body (11) can be produced of a flexible plastic material.

The triple action friction shock absorber basically comprises
- at least one cylindrical shock absorber piston (13),
- at least one shock absorber body (11) that surrounds the shock absorber piston (13), moves telescopically along the same axis (X) with the piston (13), and bears the piston (13) from its end part,
- at least one friction ring (15) which is located between the shock absorber body (11) and the piston (13) and moves in the same axis (X) with the shock absorber body (11),
- at least one lock ring (20) which bears the shock absorber piston (13) on the shock absorber body (11) and prevents the friction ring (15) from getting displaced out of the body (11),
- a friction element (16) compressed between the inner surface of the friction ring (15) and the outer surface of the shock absorber piston (13), - bearing ribs (17) provided on the friction ring (15), and
- flexible bearings (28, 29) provided in the inside of the body (11) and/or the lock ring (20).

The movement of the shock absorber body (11) on the shock absorber piston (13) on the X axis is taken under control in two ways depending on the movement of the drum (1).
- In the first condition where the drum (1) moves upwards from the machine base (7), as the drum (1) approaches to the uppermost point of the machine body (4), the shock absorber body (11) moves towards the very end point of the shock absorber piston (13) in the direction of the X-axis. Restriction of the said movement is related to the design of the washing machine body (4). When the drum (1) rises and comes to the closest position to the washing machine body (4), the triple action friction shock absorber (10) acquires its longest state, but the shock absorber body (11) does not disengage from the shock absorber piston (13).
- In the second condition where the drum (1) moves towards the machine base (7), as the drum (1) unintentionally approaches the machine base (7), that is, the shock absorber body (11) contacts the piston (13), the shock absorber (10) acquires its shortest state, and the body stopper conic (25) located within the shock absorber body (11) contacts the piston stopper conic (26) located at the end part of the shock absorber piston (13) and blocks the downwards movement of the drum (1) in X direction. The body stopper conic (25) and the piston stopper conic (26) contacting each other at this point help reduce formation of noise and vibration and prevent the shock absorber body (11) from being broken by the piston (13).

The movement of the shock absorber piston (13) perpendicular to the X axis within the body (11) is enabled by the body and lock ring flexible bearings (28, 29) provided in the inside of the body (11) and the lock ring (20). The flexible bearings (28) within the shock absorber body (11) and the flexible bearings (29) within the lock ring (20) bear the preferably tubular metal part of the shock absorber piston (13) such that there will be a very slight contact. As the bearings (28, 29) within the body (11) and the ring (20) are flexible, the vibration transferred from the shock absorber piston (13) to the body (11) decreases. Another objective of the flexible bearings (28, 29) is to keep the shock absorber piston (13) exactly on the center of the X-axis of the shock absorber body (11) whereby preventing the friction ring (15) from contacting the shock absorber body (11) along the X-axis. Thus the bearing space (27) between the shock absorber body (11) and the friction ring (15) is formed by the upper and lower isolation spaces (23, 24) which remain above and below the said space (27). Additionally, with the structure formed, the body flexible bearings (28) apply a horizontal force on the shock absorber piston (13). The lower and the upper isolation spaces (23, 24) and the bearing space (27) prevent any contact of the friction ring (15), which compresses the friction element (16) to the shock absorber piston (13), with the shock absorber body (11). This way, they make the transmission of the vibration, which is produced at constant tub speeds from the washing machine drum (1), to the washing machine base (7) in the X axis direction via the shock absorber piston (3) impossible.

The lock ring (20) is the piece that holds together the shock absorber system which is comprised of the shock absorber body (11), shock absorber piston (13) and the friction ring (15). It fits into the lock ring pin hole (33) provided on the shock absorber body (11) in a slightly tightened manner by means of the lock pins (35) provided thereon. There are preferably provided two lock pins (35) on the lock ring (20). When the lock pin (35) fits into the lock ring pin hole (33) on the shock absorber body (11) the lock ring - shock absorber body contact surface (37) and the shock absorber body - lock ring contact surfaces (38) slightly contact and bear each other. Lock pin support ribs (36) are incorporated to the surfaces of the lock pins (35) that fit into the body (11) in order to prevent the lock pins (35) from easily coming off from the shock absorber body (11) and to avoid any movement that might occur on the body (11). The lock ring (20) has important functions such as preventing the friction ring (15) from getting disengaged from the shock absorber body (11) and limiting free motion, and determining the working dimensions of the shock absorber (10).

The function of the friction ring (15) is to compress the friction element (16) onto the shock absorber piston (13) whereby enabling the shock absorber (10) to produce a damping force. In order to achieve this, the friction ring (15) contacts the friction element (16) only from the friction ring - friction element contact surface (30). A circular protrusion (18) is formed around the X axis of the ring (15) inner surface in order to fix the position of the friction element (16) between the shock absorber piston (13) and the friction ring (15) and to prevent displacement thereof. This protrusion is preferably 1 mm x 45°.

According to the invention, there are bearing ribs (17) preferably two provided on the friction ring (15) on the X axis direction and on the same plane. The aim of the bearing ribs (17) is to prevent rotation of the shock absorber piston (13) within the shock absorber body (11) around the X-axis. The bearing ribs (17) move in the X axis direction between the friction ring canal ribs (19) located within the shock absorber body (11). During this motion, the contact between the bearing ribs (17) and the friction ring canal ribs (19) occurs only from the side surfaces (31, 32) of the friction ring canal ribs (19). Thus a bearing space forms between the shock absorber body (11) and the friction ring (15). By preferably greasing the shock absorber body bearing rib side surface (31) and the friction ring canal rib contact surfaces (32), formation of noise during contact can be further decreased. The greasing to be applied to these surfaces (31, 32) will also mean greasing applied to the bearing space (27).

Friction force should be produced in order to terminate the free motion of the shock absorber piston (13) and the friction element (16) and the friction ring (15) contacting the shock absorber piston (13) within the shock absorber body (11) (first action) and to damp the movement of the drum (1) towards the washing machine base (second action). In the inventive shock absorber (10), the body stopper protrusions (21) provided within the shock absorber body (11) and the lock ring stopper protrusions (22) provided in the lock ring (20) are used for producing the friction force. The said protrusions (21, 22) can be of variable number. In the preferred embodiment of the invention, there are preferably used 4 stopper protrusions (21, 22) on each of the lock ring and shock absorber body. Furthermore, by means of the circular structure of the stopper protrusions (21, 22), strength of the protrusions against any shocks that might come from the drum (1) is increased. The said protrusions (21, 22) may be in variable lengths. This way, the free working distance (dimension of the first action) of the shock absorber can be adjusted.

In a preferred embodiment of the invention, the body stopper protrusions (21) provided on the shock absorber body (11) are equipped with body stopper protrusion support ribs (34) in order for them to protect (maintain) their structure for a long time. The support ribs (34) on the shock absorber body (11) are not in contact with the friction element (16) and the friction ring (15).

The body (11) stopper protrusions (21) and the lock ring (20) stopper protrusions (22) are located preferably with an angle of 45° to each other around X axis. In constant oscillating drum (1) movements, the friction element (16) and the friction ring (15) operate freely and without contacting the shock absorber body (11). When the oscillation amount of the drum (1) increases, only the friction element (16) contacts with the lock ring (20) stopper protrusions (22) or shock absorber body (11) stopper protrusions (21). When the oscillation amount increases, the friction ring (15) does not contact the stopper protrusions (21, 22) at all and contact of two non-flexible pieces is avoided. Thus, a vibration transmission that might be transferred from the friction element (16) to the machine base (7) via the shock absorber piston (13) is prevented.

Furthermore, since the friction element (16) is fixed between the friction ring (15) and the shock absorber piston (13) only by means of a protrusion (18), contact of the friction element (16) with the stopper protrusions (21, 22) smoothens the transition of the shock absorber (10) from the free motion to the damping (third action).

The production cost of the inventive triple action shock absorber (10) remains at a very low level compared to the shock absorbers used in the prior art, due to the fact that it is easy to mount and that comprised of few pieces.

## Claims

1. Triple action friction shock absorber (10) comprising at least one cylindrical shock absorber piston (13); at least one shock absorber body (11) that surrounds the shock absorber piston (13), moves telescopically along the same axis (X) with the piston (13), and bears the piston (13) from its end part; whereby
- at least one friction ring (15) is located between the shock absorber body (11) and the piston (13), and moves in the same axis (X) with the body (11),
- at least one lock ring (20) bears the shock absorber piston (13) on the shock absorber body (11) and prevents the friction ring (15) from getting displaced out of the body (11),
- a friction element (16) is compressed between the inner surface of the friction ring (15) and the outer surface of the shock absorber piston (13), **characterized by**
- bearing ribs (17) provided on the friction ring (15) on the same axis (x) direction and on the same plane to prevent rotation of the shock absorber piston (13) within the shock absorber body (11) around said axis (X), and
- flexible bearings (28, 29) which are provided in the inside of the body (11) and/or the lock ring (20) and which enable movement of the shock absorber piston (13) within the body (11).

2. Triple action friction shock absorber (10) according to Claim 1 **characterized by** said friction ring (15) which enables the friction element (16) to be positioned and fixed on the shock absorber piston (13).

3. Triple action friction shock absorber (10) according to any of the preceding claims **characterized by** flexible bearings (28, 29) which keep the shock absorber piston (13) in the exact center of the X-axis of the body (11) thereby preventing the friction ring (15) from contacting the body (11) along the X-axis.

4. Triple action friction shock absorber (10) according to any of the preceding claims **characterized by** lower and upper isolation spaces (23, 24) and a bearing space (27) which prevents contact of the friction ring (15) with the shock absorber body (11).

5. Triple action friction shock absorber (10) according to any of the preceding claims **characterized by** a lock pin (35) provided on the lock ring (20).

6. Triple action friction shock absorber (10) according to Claim 5 **characterized by** the lock pin (35) which fits into the lock ring pin hole (33) provided on the shock absorber body (11).

7. Triple action friction shock absorber (10) according to any of the preceding claims **characterized by** lock pin support ribs (36) which are incorporated to the lock pins (35) in order to prevent the lock pins (35) from easily coming off from the shock absorber body (11).

8. Triple action friction shock absorber (10) according to any of the preceding claims **characterized by** a protrusion (18) which is provided on the friction ring (15) and which fixes the position of the friction element (16) between the shock absorber piston (13) and the friction ring (15) and prevents displacement thereof.

9. Triple action friction shock absorber (10) according to Claim 8 **characterized by** the circular protrusion (18) which is formed around the X axis of the inner surface of the friction ring (15).

10. Triple action friction shock absorber (10) according to any of the preceding claims **characterized by** the body and lock ring stopper protrusions (21, 22) which are provided within the shock absorber body (11) and/or the lock ring (20) and used for producing the friction force.

11. Triple action friction shock absorber (10) according to any of the preceding claims **characterized by** support ribs (34, 36) used for protecting the structure of the body and lock ring stopper protrusions (21, 22).

12. Triple action friction shock absorber (10) according to any of the preceding claims **characterized by** body stopper protrusion (21) and lock ring stopper protrusion (22) positioned with an angle of 45° to each other.

13. Triple action friction shock absorber (10) according to any of the preceding claims **characterized by** friction ring canal rib (19) used for enabling the movement of the friction ring (15) within the shock absorber body (11).

14. Triple action friction shock absorber (10) according to any of the preceding claims **characterized by** the shock absorber body (11) with a body stopper conic (25) and the shock absorber piston (13) with a piston stopper conic (26) fitting to each other, used for preventing the piston (13) from damaging the shock absorber body (11).

## Patentansprüche

1. Dreifach wirkender Reibungsstoβdämpfer (10), der mindestens einen zylindrischen Stoβdämpferkolben (13) aufweist, wobei sich mindestens ein Stoßdämpferkörper (11), der den Stoβdämpferkolben (13) umgibt, teleskopisch entlang derselben Achse (X) mit dem Kolben (13) bewegt und den Kolben (13) von seinem Endteil her lagert, wobei
- mindestens ein Reibungsring (15) zwischen dem Stoßdämpferkörper (11) und dem Kolben (13) liegt und sich in derselben Achse (X) mit dem Körper (11) bewegt,
- mindestens ein Sperrring (20) den Stoβdämpferkolben (13) auf dem Stoßdämpferkörper (11) trägt den Reibungsring (15) daran hindert, aus dem Körper (11) verlagert zu werden,
- ein Reibungselement (16) zwischen der inneren Oberfläche des Reibungsrings (15) und der äußeren Oberfläche des Stoβdämpferkolbens (13) komprimiert wird, **dadurch gekennzeichnet, dass**
- Lagerrippen (17), die auf dem Reibungsring (15) auf derselben Achsenrichtung (X) und auf derselben Ebene vorgesehen sind, um die Drehung des Stoβdämpferkolbens (13) innerhalb des Stoßdämpferkörpers (11) um die Achse (X) zu verhindern, und
- elastische Lager (28, 29), die in der Innenseite des Körpers (11) und/oder des Sperrrings (20) vorgesehen sind und Bewegung des Stoβdämpferkolbens (13) innerhalb des Körpers (11) ermöglichen.

2. Dreifach wirkender Reibungsstoβdämpfer (10) nach Anspruch 1, **gekennzeichnet durch** den Reibungsring (15), der es ermöglicht, das Reibungselement (16) zu positionieren und auf dem Stoβdämpferkolben (13) zu befestigen.

3. Dreifach wirkender Reibungsstoßdämpfer (10) nach einem der vorhergehenden Ansprüche, **gekennzeichnet durch** elastische Lager (28, 29), die den Stoßdämpferkolben (13) genau in der Mitte der X-Achse des Körpers (11) halten und **dadurch** verhindern, dass der Reibungsring (15) den Körper (11) entlang der X-Achse berührt.

4. Dreifach wirkender Reibungsstoßdämpfer (10) nach einem der vorhergehenden Ansprüche **gekennzeichnet durch** einen unteren und einen oberen Isolierraum (23, 24) und einen Lagerraum (27), der die Berührung des Reibungsrings (15) mit dem Stoßdämpferkörper (11) verhindert.

5. Dreifach wirkender Reibungsstoßdämpfer (10) nach einem der vorhergehenden Ansprüche, **gekennzeichnet durch** einen Sperrstift (35), der auf dem Sperrring (20) vorgesehen ist.

6. Dreifach wirkender Reibungsstoßdämpfer (10) nach Anspruch 5, **gekennzeichnet durch** den Sperrstift (35), der in die Sperrring-Stiftbohrung (33), die auf dem Stoßdämpferkörper (11) vorgesehen ist, passt.

7. Dreifach wirkender Reibungsstoβdämpfer (10) nach einem der vorhergehenden Ansprüche, **gekennzeichnet durch** Sperrstift-Tragrippen (36), die in die Sperrstifte (35) eingebaut sind, um die Sperrstifte (35) daran zu hindern, sich leicht von dem Stoßdämpferkörper (11) zu lösen.

8. Dreifach wirkender Reibungsstoβdämpfer (10) nach einem der vorhergehenden Ansprüche, **gekennzeichnet durch** einen Vorsprung (18), der auf dem Reibungsring (15) vorgesehen ist und der die Position des Reibungselements (16) zwischen dem Stoβdämpferkolben (13) und dem Reibungsring (15) fixiert und seine Verlagerung verhindert.

9. Dreifach wirkender Reibungsstoβdämpfer (10) nach Anspruch 8, **gekennzeichnet durch** den kreisförmigen Vorsprung (18), der um die X-Achse der inneren Oberfläche des Reibungsrings (15) ausgebildet ist.

10. Dreifach wirkender Reibungsstoβdämpfer (10) nach einem der vorhergehenden Ansprüche, **gekennzeichnet durch** die Körper- und Sperrring-Anschlagvorsprünge (21, 22), die innerhalb des Stoßdämpferkörpers (11) und/oder des Sperrrings (20) vorgesehen sind und zum Erzeugen der Reibungskraft verwendet werden.

11. Dreifach wirkender Reibungsstoβdämpfer (10) nach einem der vorhergehenden Ansprüche, **gekennzeichnet durch** Tragrippen (34, 36), die zum Schützen der Struktur der Körper- und Sperrring-Anschlagvorsprünge (21, 22) verwendet werden.

12. Dreifach wirkender Reibungsstoβdämpfer (10) nach einem der vorhergehenden Ansprüche, **gekennzeichnet durch** Körperanschlagvorsprünge (21) und Sperrring-Anschlagvorsprünge (22), die mit einem Winkel von 45° zu einander positioniert sind.

13. Dreifach wirkender Reibungsstoβdämpfer (10) nach einem der vorhergehenden Ansprüche, **gekennzeichnet durch** eine Reibungsring-Kanalrippe (19), die verwendet wird, um die Bewegung des Reibungsrings (15) innerhalb des Stoßdämpferkörpers (11) zu ermöglichen.

14. Dreifach wirkender Reibungsstoβdämpfer (10) nach einem der vorhergehenden Ansprüche, **gekennzeichnet durch** den Stoßdämpferkörper (11) mit einem Körperanschlagkegel (25) und dem Stoβdämpferkolben (13) mit einem Kolbenanschlagkegel (26), die zueinander passen, die verwendet werden, um den Kolben (13) daran zu hindern, den Stoßdämpferkörper (11) zu beschädigen.

## Revendications

1. Amortisseur de chocs à friction à triple action (10) comprenant au moins un piston d'amortisseur de chocs cylindrique (13) ; au moins un corps d'amortisseur de chocs (11) qui entoure le piston d'amortisseur de chocs (13), se meut télescopiquement le long du même axe (X) que l'axe du piston (13) et porte le piston (13) depuis son extrémité ; dans lequel
- au moins un anneau de friction (15) est situé entre le corps d'amortisseur de chocs (11) et le piston (13) et se meut le long du même axe (X) avec le corps (11),
- au moins un anneau de blocage (20) porte le piston d'amortisseur de chocs (13) sur le corps d'amortisseur (11) et empêche l'anneau de friction (15) d'être déplacé hors du corps (11),
- un élément de friction (16) est comprimé entre la surface interne de l'anneau de friction (15) et la surface externe du piston d'amortisseur de chocs (13), **caractérisé par**
- des nervures de support (17) prévues sur l'anneau de friction (15) dans la même direction axiale (x) et dans le même plan pour empêcher la rotation du piston d'amortisseur de chocs (13) au sein du corps d'amortisseur de chocs (11) autour de l'axe (X), et
- des supports flexibles (28,29) qui sont prévus à l'intérieur du corps (11) et/ou de l'anneau de blocage (20) et qui permettent un mouvement du piston d'amortisseur de chocs (13) à l'intérieur du corps (11).

2. Amortisseur de chocs à friction à triple action (10) selon la revendication 1, **caractérisé par** ledit anneau de friction (15) qui permet à l'élément de friction (16) d'être positionné et fixé sur le piston d'amortisseur de chocs (13).

3. Amortisseur de chocs à friction à triple action (10) selon l'une quelconque des revendications précédentes, **caractérisé par** des appuis flexibles (28,29) qui maintiennent le piston d'amortisseur de chocs (13) au centre exact de l'axe X du corps (11), empêchant ainsi l'anneau de friction (15) d'entrer en contact avec le corps (11) le long de l'axe X.

4. Amortisseur de chocs à friction à triple action (10) selon l'une quelconque des revendications précédentes, **caractérisé par** des espaces d'isolement inférieur et supérieur (23,24) et un espace de dégagement (27) qui empêche le contact de l'anneau de friction (15) et du corps d'amortisseur de chocs (11).

5. Amortisseur de chocs à friction à triple action (10) selon l'une quelconque des revendications précédentes, **caractérisé par** une tige de blocage (35) prévue sur l'anneau de blocage (20).

6. Amortisseur de chocs à friction à triple action (10) selon la revendication 5, **caractérisé par** la tige de blocage (35) qui peut s'introduire dans un trou de tige d'anneau de blocage (33) prévu sur le corps d'amortisseur de chocs (11).

7. Amortisseur de chocs à friction à triple action (10) selon l'une quelconque des revendications précédentes, **caractérisée par** des nervures de support de tige de blocage (36) qui sont incorporées aux tiges de blocage (35) afin d'empêcher les tiges de blocage (35) de sortir facilement du corps d'amortisseur (11).

8. Amortisseur de chocs à friction à triple action (10) selon l'une quelconque des revendications précédentes, **caractérisé par** une protubérance (18) qui est prévue sur l'anneau de friction (15) et qui fixe la position de l'élément de friction (16) entre le piston d'amortisseur de chocs (13) et l'anneau de friction (15) et empêche son déplacement.

9. Amortisseur de chocs à friction à triple action (10) selon la revendication 8, **caractérisé par** une protubérance circulaire (18) qui est formée autour de l'axe X sur la surface interne de l'anneau de friction (15).

10. Amortisseur de chocs à friction à triple action (10) selon l'une quelconque des revendications précédentes, **caractérisé par** des protubérances d'arrêt de corps et d'anneau de blocage (21,22), qui sont prévues à l'intérieur du corps d'amortisseur de chocs (11) et/ou de l'anneau de blocage (20) et utilisées pour produire la force de friction.

11. Amortisseur de chocs à friction à triple action (10) selon l'une quelconque des revendications précédentes, **caractérisé par** des nervures de support (34,36) utilisées pour protéger la structure des protubérances d'arrêt de corps et d'anneau de blocage (21,22).

12. Amortisseur de chocs à friction à triple action (10) selon l'une quelconque des revendications précédentes, **caractérisé par** une protubérance d'arrêt de corps (21) et par une protubérance d'arrêt d'anneau de blocage (22), positionnées avec un angle de 45 degrés l'une par rapport à l'autre.

13. Amortisseur de chocs à friction à triple action (10) selon l'une quelconque des revendications précédentes, **caractérisé par** une nervure de canal d'anneau de friction (19) utilisée pour permettre le mouvement de l'anneau de friction (15) à l'intérieur du corps d'amortisseur de chocs (11).

14. Amortisseur de chocs à friction à triple action (10) selon l'une quelconque des revendications précédentes, **caractérisé par** le corps d'amortisseur de chocs (11) qui présente un cône d'arrêt de corps (25) et par le piston d'amortisseur de chocs (13) qui présente un cône d'arrêt de piston (26) assortis l'un à l'autre, utilisés pour empêcher le piston (13) d'endommager le corps d'amortisseur de chocs (11).
